# EUROPÄISCHE PATENTSCHRIFT

(11) **EP 2 502 329 B1**
(45) Veröffentlichungstag und Bekanntmachung des Hinweises auf die Patenterteilung: **10.09.2014**
(21) Anmeldenummer: 10776337.7
(22) Anmeldetag: 03.11.2010
(51) Int. Cl.: H02J 7/14, H02P 9/08, H02P 9/48

(54) **VORRICHTUNG ZUR MINIMIERUNG DER STROMAUFNAHME EINES KFZ-GENERATORS AUS DER BATTERIE WÄHREND DER STARTPHASE EINES KRAFTFAHRZEUGS**
DEVICE FOR MINIMIZING THE CURRENT CONSUMPTION OF A MOTOR VEHICLE GENERATOR FROM THE BATTERY DURING THE STARTING PHASE OF A MOTOR VEHICLE
DISPOSITIF POUR RÉDUIRE AU MINIMUM LA CONSOMMATION DU COURANT PRÉLEVÉ DANS UNE BATTERIE PAR UNE GÉNÉRATRICE DE VÉHICULE À MOTEUR PENDANT LA PHASE DE DÉMARRAGE D'UN VÉHICULE À MOTEUR

(30) Priorität: 17.11.2009 DE 102009046760
(43) Veröffentlichungstag der Anmeldung: 26.09.2012
(73) Patentinhaber: Robert Bosch GmbH, 70442 Stuttgart (DE)
(72) Erfinder: HERZ, Michael, 70469 Stuttgart (DE); MICKO, Andre, 74321 Bietigheim-Bissingen (DE)
(86) Internationale Anmeldenummer: PCT/EP2010/066718
(87) Internationale Veröffentlichungsnummer: WO 2011/061055

(56) Entgegenhaltungen:
- EP-A1- 0 510 527
- GB-A- 2 424 491
- US-A1- 2005 135 133

## Beschreibung

Die Erfindung betrifft eine Vorrichtung zur Minimierung der Stromaufnahme eines KFZ-Generators aus der Batterie während der Startphase eines Kraftfahrzeugs

### Stand der Technik

Es ist bereits bekannt, die Ausgangsspannung eines Generators mittels eines Generatorreglers zu regeln. Die Ausgangsspannung eines Generators ist abhängig von mehreren Einflussgrößen, zu denen die Drehzahl, die elektrische Belastung im Bordnetz, der Ladezustand der Starterbatterie und die Temperatur gehören. Um eine konstante Spannung im Bordnetz zu erzeugen, regelt der Generatorregler die Ausgangsspannung des Generators innerhalb vorgegebener Grenzen. Diese Regelung erfolgt über eine Anpassung des durch die Erregerwicklung des Generators fließenden Erregerstromes. Zur Anpassung des Erregerstromes wird eine Änderung des Tastverhältnisses eines von der Reglersteuerung bereitgestellten PWM-Ansteuersignals für einen Schalttransistor durchgeführt.

Bei Verwendung eines High-Side-Transistors als Schalttransistor des Generatorreglers wird der Erregerstrom von einem Gleichspannungsversorgungsanschluss B+ abgenommen und über den Transistor zur Erregerwicklung geführt. Der zweite Anschluss der Erregerwicklung ist mit Masse verbunden.

Die an den Phasenspannungsanschlüssen U, V und W des Generators erzeugten Wechselspannungen werden in einer mehrere Zweige aufweisenden Gleichrichteranordnung gleichgerichtet und dem Bordnetz des Kraftfahrzeugs bereitgestellt und auch dem genannten Gleichspannungsversorgungsanschluss des Generatorreglers zugeleitet.

Des Weiteren ist der Generatorregler auch mit mindestens einem der Phasenspannungsanschlüsse des Generators verbunden, um mindestens eine der Phasenspannungen des Generators auszuwerten.

Der Generatorregler weist eine Reglersteuerung auf, welche ein Schaltsignal für den Schalttransistor des Generatorreglers bereitstellt und welcher als Eingangssignale die am Gleichspannungsversorgungsanschluss B+ anliegende Gleichspannung sowie die mindestens eine der Phasenspannungen des Generators zugeführt werden.

Es ist bereits bekannt, bei einem Motorstart mittels des Generatorreglers ein PWM-Ansteuersignal mit einem vorgegebenen festen Tastverhältnis zu erzeugen, um einen Erregerstrom bereitzustellen. Dies ist Voraussetzung, um bei einem Motorstart eine sichere Drehzahlerfassung gewährleisten zu können. Das genannte Tastverhältnis ist derart gewählt, dass ein Motorstart in allen Temperaturbereichen mittels einer Drehzahlerfassung über mindestens eine Phasenspannung sicher erkannt werden kann. Die Phasenspannung muss dabei eine ausreichend große Amplitude aufweisen.

Die Amplitude der Phasenspannung ist vom Erregerstrom abhängig und damit bei fest eingestelltem Tastverhältnis auch von der Temperatur, durch die ein im Erregerkreis vorgesehener Ohmscher Widerstand beeinflusst wird.

Um bei allen Temperaturen eine sichere Drehzahlauswertung in der Motorstartphase sicherzustellen, muss das Tastverhältnis in der Stillstandsphase entsprechend den ungünstigsten Bedingungen eingestellt werden.

Dies hat aber zur Folge, dass sich beim Vorliegen günstigerer Arbeitspunkte, wie sie beispielsweise bei niedrigeren Temperaturen vorliegen, bei dem fest eingestellten Tastverhältnis ein größerer Erregerstrom und damit eine größere Stromaufnahme aus der Batterie des Fahrzeugs ergibt, als dies notwendig wäre.

Aus der DE 69213538 T2 ist eine Überwachungsschaltung für eine Vorrichtung zur Nachladung einer Batterie in einem Fahrzeug bekannt, die eine hohe Stromaufnahme verhindert, wenn das Kraftfahrzeug steht oder der Motor abgestellt ist. Die genannte Überwachungsschaltung enthält eine Fühlerstufe, die ein Signal liefert, welches den in der Feldspule fließenden Strom anzeigt. Der Stromfluss durch den Ansteuertransistor der Feldspule wird derart geregelt, dass eine erste oder eine zweite Betriebsart vorliegt. In der ersten Betriebsart, die dann eingeleitet wird, wenn die Drehzahl des Generators unter einem vorgegebenen Pegel liegt, fließt in der Feldspule ein Spitzenstrom mit niedrigem Mittelwert. In der zweiten Betriebsart, die dann eingeleitet wird, wenn die Drehzahl des Generators größer ist als der vorgegebene Pegel, fließt in der Feldspule ein Spitzenstrom mit höherem Mittelwert. Bei der bekannten Überwachungschaltung wird folglich der durch die Feldspule fließende Strom in Abhängigkeit von der Drehzahl des Rotors des Generators verändert.

Weitere gattungsgemäße Vorrichtungen sind auch aus der GB 242 4491 und der US 2005/0135133 A1 bekannt.

### Offenbarung der Erfindung

Eine Vorrichtung gemäß der vorliegenden Erfindung weist dem gegenüber den Vorteil auf, dass bei einem Motorstart im Fahrzeugstillstand und Generatorstillstand die maximale Stromaufnahme aus der Batterie begrenzt bzw. reduziert ist und dennoch im kompletten Temperaturbereich eine ausreichende Erregung zum sicheren Erkennen des Motorstarts mittels Auswertung einer der Phasenspannungen des Generators des Kraftfahrzeugs gewährleistet ist. Dies bedeutet, dass im Zustand Stillstandstakten, in welchem der Motor des Kraftfahrzeugs sich in der Stillstandsphase befindet, der Generatorregler aber aktiv ist, die Stromaufnahme des Regler/Generators aus der Batterie reduziert bzw. begrenzt ist.

Erreicht wird dies gemäß dem Anspruch 1 im wesentlichen dadurch, dass die Reglersteuerung Mittel zur Bereitstellung eines ersten Ansteuersignals, welches ein vorgegebenes fest eingestelltes Tastverhältnis aufweist, Mittel zur Bereitstellung eines zweiten Ansteuersignals, welches ein vom Erregerstrom abhängiges Tastverhältnis aufweist, und Mittel zur Auswahl des Ansteuersignals mit dem kleineren der beiden Tastverhältnisse aufweist.

Weitere vorteilhafte Eigenschaften der Erfindung ergeben sich aus deren nachfolgender Erläuterung anhand der Zeichnung. Es zeigt
- Figur 1: ein Schaltbild einer Generatorvorrichtung gemäß einem Ausführungsbeispiel für die Erfindung und
- Figur 2: eine detailliertere Darstellung der Reglersteuerung des in der Figur 1 gezeigten Generatorreglers.

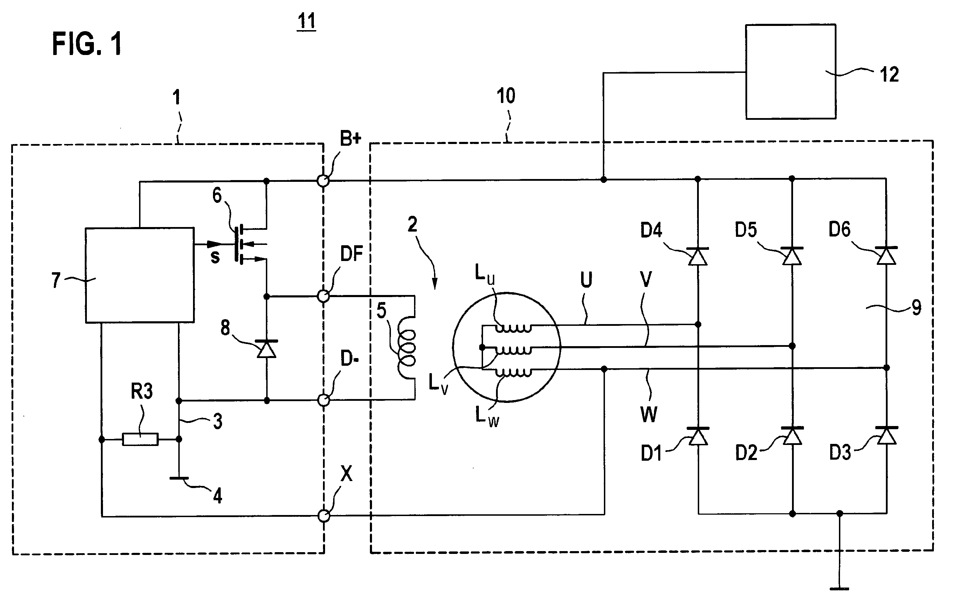

Die Figur 1 zeigt ein Schaltbild einer Generatorvorrichtung gemäß einem Ausführungsbeispiel für die Erfindung. Die dargestellte Generatorvorrichtung 11 weist einen Generatorregler 1 und eine Generatoreinheit 10 auf, die an ihrem Ausgang eine Versorgungsgleichspannung für das Bordnetz 12 eines Kraftfahrzeugs bereitstellt.

Die Generatoreinheit 10 weist einen Generator 2 und eine Gleichrichteranordnung 9 auf. Der Generator 2 enthält eine Erregerwicklung 5 und Phasenwicklungen L_{U}, L_{V}, L_{w}, die z.B. in Form einer Sternschaltung miteinander verschaltet sind. Der Generator 2 stellt an seinen Phasenspannungsanschlüssen U, V und W Wechelspannungen zur Verfüngung, die der nachgeschalteten Gleichrichteranordnung 9 zugeführt werden. Alternativ zum gezeigten Ausführungsbeispiel kann auch eine andere Anzahl von Phasen bzw. Phasenspannungsanschlüssen vorliegen.

Die Gleichrichteranordnung 9 enthält entsprechend der Anzahl an Phasensträngen drei Zweige, von denen jeder eine Reihenschaltung zweier Dioden oder anderer geeigneter Komponenten aufweist und einem der Phasenspannungsanschlüsse des Generators zugeordnet ist.

Der Phasenspannungsanschluss U des Generators 2 ist mit dem Verbindungspunkt zwischen den Dioden D1 und D4 des ersten Gleichrichterzweigs verbunden. Der Phasenspannungsanschluss V des Generators 2 ist an einen Verbindungspunkt zwischen den Dioden D2 und D5 des zweiten Gleichrichterzweigs angeschlossen. Der Phasenspannungsanschluss W des Generators 2 ist mit einem Verbindungspunkt zwischen den Dioden D3 und D6 des dritten Gleichrichterzweigs verbunden.

Die Kathoden der Dioden D4, D5 und D6 sind miteinander verbunden. Dort wird die Ausgangsgleichspannung der Generatoreinheit 10 bereitgestellt und an das Bordnetz 12 weitergegeben. Die Anoden der Dioden D1, D2 und D3 sind ebenfalls miteinander verbunden und liegen auf Masse.

Der Phasenspannungsanschluss W des Generators 2 steht des Weiteren über einen Anschluss X des Generatorreglers 1 mit der Reglersteuerung 7 des Generatorreglers 1 und über einen Widerstand R3 und eine Masseverbindung 3 des Generatorreglers mit Masse 4 in Verbindung.

Der Generatorregler 1 weist einen Betriebsspannungsanschluss B+ sowie weitere Anschlüsse DF, D- und X auf. Des Weiteren enthält der Generatorregler eine Reglersteuerung 7. Die Reglersteuerung 7 ist dazu vorgesehen, einer Endstufe 6, die einen Schalttransistor aufweist, ein PWM-Ansteuersignal zur Verfügung zu stellen. Die Reglersteuerung 7 ist weiterhin mit dem Betriebsspannungsanschluss B+ und über die Masseverbindung 3 mit Masse 4 verbunden. Ferner steht die Reglersteuerung 7 mit dem Anschluss X des Generatorreglers 1 in Verbindung, um ein vom Phasenspannungsanschluss W des Generators 2 abgeleitetes Phasenspannungssignal zu empfangen.

Darüber hinaus weist die in der Figur 1 gezeigte Vorrichtung einen Erregerstromkreis auf. Dieser verläuft vom Betriebsspannungsanschluss B+ des Generatorreglers 1 über den Schalttransistor 6 des Generatorreglers, den Anschluss DF des Generatorreglers, die Erregerwicklung 5, den Anschluss D- des Generatorreglers und die Masseverbindung 3 nach Masse 4. Zwischen die Anschlüsse D- und DF des Generatorreglers 1 ist entweder eine Freilaufdiode 8 geschaltet oder es wird ein aktiver Freilauf mit einem Schalttransistor verwendet.

Die Reglersteuerung 7, welche mit dem Betriebsspannungsanschluss B+ und über den Anschluss X mit dem Phasenspannungsanschluss W des Generators 2 verbunden ist, steuert den Schalter 6 mit einem Steuersignal s derart an, dass ein Erregerstrom durch die Erregerwicklung 5 fließt, der sowohl von der am Betriebsspannungsanschluss B+ vorliegenden Gleichspannung als auch von der ihr über den Anschluss X zugeileiteten Phasenspannung abhängig ist.

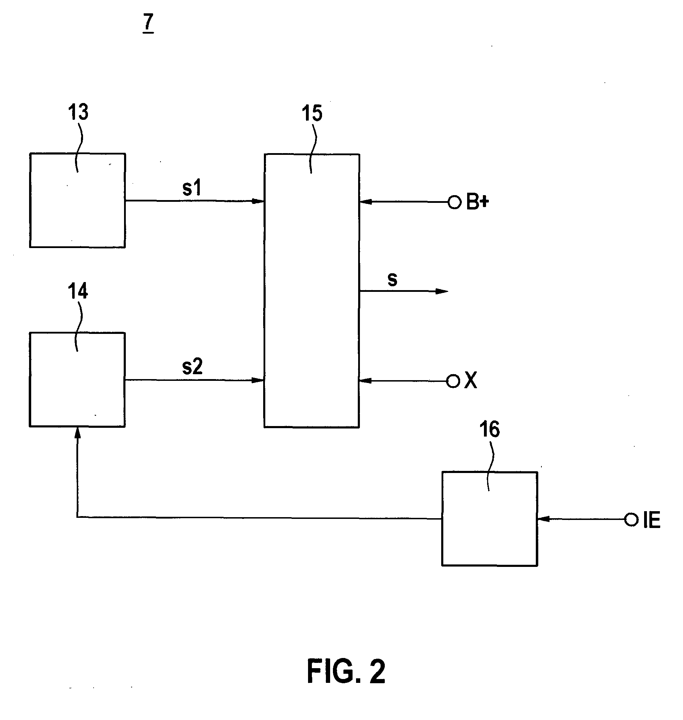

Die Figur 2 zeigt eine detailliertere Darstellung eines Teils der Reglersteuerung 7. Diese weist Mittel 13 zur Bereitstellung eines ersten Ansteuersignals s1 auf, welches ein vorgegebenes, fest eingestelltes Tastverhältnis hat. Daten, die diesem vorgegebenen, fest eingestellten Tastverhältnis entsprechen, werden vorzugsweise bei der Herstellung des Generatorreglers im Werk nicht flüchtig in den Mitteln 13 hinterlegt, die einen nicht flüchtigen Speicher enthalten.

Desweiteren weist die Reglersteuerung 7 Mittel 14 zur Bereitstellung eines zweiten Ansteuersignals s2 auf, welches ein vom Erregerstrom IE abhängiges Tast-verhältnis aufweist. Die Mittel 14 zur Bereitstellung des zweiten Ansteuersignals s2 umfassen eine Recheneinheit, die das zweite Ansteuersignal s2 in Abhängigkeit vom Erregerstrom ermitteln. Die Information über den Erregerstrom wird der Recheneinheit von Mitteln 16 zur Messung des Erregerstroms zugeführt, die mit der Recheneinheit verbunden sind. Bei den Mitteln 16 handelt es sich beispielsweise um einen Messwiderstand, welcher mit der Erregerspule 5 verbunden ist und an welchem eine dem Erregerstrom entsprechende Spannung abfällt.

Ferner enthält die Reglersteuerung 7 Mittel 15 zur Auswahl des Ansteuersignals mit dem kleineren der beiden vorgenannten Tastverhältnisse. Diese Mittel 15 umfassen einen Vergleicher, welcher mit den Mitteln 13 zur Bereitstellung des ersten Ansteuersignals s1 und den Mitteln 14 zur Bereitstellung des zweiten Ansteuersignals s2 verbunden ist und welcher ausgangsseitig das Ansteuersignal s mit dem kleineren der beiden vorgenannten Tastverhältnisse bereitstellt. Das Ansteuersignal s wird der in der Figur 1 gezeigten Endstufe 6, die einen Schalttransistor aufweist, zugeführt.

Der genannte Vergleicher der Mittel 15 ist vorzugsweise Bestandteil einer Recheneinheit, welcher des Weiteren über den Anschluss B+ die Betriebsspannung zugeführt wird und welche über den Anschluss X mit dem Phasenspannungsanschluss W des Generators 2 verbunden ist. Diese Recheneinheit ist auch nach Abschluss des Startvorganges für die Ermittlung eines Ansteuersignals s für die Endstufe 6 des Generatorreglers 1 vorgesehen, wobei die Recheneinheit bei der Ermittlung des Ansteuersignals s die Betriebsspannung und die Phasenspannung berücksichtigt.

Nach alledem gewährleistet eine Vorrichtung gemäß der Erfindung, dass bei einem Motorstart des Kraftfahrzeugs in allen Temperaturbereichen eine Drehzahlerfassung über die Phasenspannung möglich ist. Zu diesem Zweck weist die Reglersteuerung Mittel zur Bereitstellung eines ersten Ansteuersignals s1, welches ein vorgegebenes, fest eingestelltes, in einem Speicher der Reglersteuerung nichtflüchtig hinterlegtes Tastverhältnis aufweist, Mittel zur Bereitstellung eines zweiten Ansteuersignals s2, welches ein vom Erregerstrom abhängiges Tastverhältnis aufweist, und Mittel zur Auswahl des Ansteuersignals mit dem kleineren der beiden Tastverhältnisse auf. Dieses Ansteuersignal s mit dem kleineren der beiden Tastverhältnisse wird bei einem Motorstart, d.h. in der Stillstandsphase des Motors bei aktivem Regler, der Endstufe des Generatorreglers zugeführt. Dadurch wird erreicht, dass durch die Erregerwicklung stets ein Eregerstrom fließt, aufgrund dessen eine Phasenspannung mit zu einer Auswertung der Phasenspannung ausreichender Amplitude bereitgestellt wird, wobei diese Phasenspannung der Reglersteuerung 7 zugeführt wird. Dabei ist sichergestellt, dass beim Vorliegen günstigerer Arbeitspunkte, die beispielsweise bei niedrigeren Temperaturen vorliegen, der Batterie nicht mehr Strom entnommen wird als es notwendig ist.

Ein Vorteil dieser Vorgehensweise besteht darin, dass in dem Falle, dass sich durch eine sehr hohe Temperatur oder einen Fehler, beispielsweise durch eine Unterbrechung im Erregerkreis, ein sehr großes Tastverhältnis einstellen würde, auf das vorgegebene, fest eingestellte Tastverhältnis zurückgegriffen bzw. begrenzt wird.

## Patentansprüche

1. Vorrichtung zur Minimierung der Stromaufnahme eines KFZ-Generators aus der Batterie während der Startphase eines Kraftfahrzeugs, welche
- eine Generatoreinheit (10) und
- einen eine Reglersteuerung (7) und eine Endstufe (6) aufweisenden Generatorregler (1) aufweist, wobei
- die Reglersteuerung (7) der Endstufe (6) ein ein Tastverhältnis aufweisendes Ansteuersignal zuführt,
- die Reglersteuerung (7) Mittel (13) zur Bereitstellung eines ersten Ansteuersignals (s1) aufweist,
- die Reglersteuerung (7) Mittel (14) zur Bereitstellung eines zweiten Ansteuersignals (s2) aufweist, welches ein vom Erregerstrom abhängiges Tastverhältnis aufweist,
**dadurch gekennzeichnet, dass**
- die Mittel (13) zur Bereitstellung des ersten Ansteuersignals (s1) einen nichtflüchtigen Speicher aufweisen, in welchem bei der Herstellung des Generatorreglers im Werk hinterlegte Daten abgespeichert sind, die ein vorgegebenes, fest eingestelltes Tastverhältnis spezifizieren und dass
- die Reglersteuerung Mittel (15) zur Auswahl des Ansteuersignals mit dem kleineren der beiden Tastverhältnisse aufweist, welches als Ansteuersignal (s) der Endstufe (6) zugeführt wird, wobei
- die Mittel (15) zur Auswahl des Ansteuersignals mit dem kleineren der beiden Tastverhältnisse einen Vergleicher umfassen, welcher mit den Mitteln (13) zur Bereitstellung des ersten Ansteuersignals (s1) und den Mitteln (14) zur Bereitstellung des zweiten Ansteuersignals (s2) verbunden ist und welcher ausgangsseitig das Ansteuersignal (s) mit dem kleineren der beiden Tastverhältnisse bereitstellt.

2. Vorrichtung nach Anspruch 1, **dadurch gekennzeichnet, dass** sie Mittel (16) zur Messung des Erregerstromes aufweist, die mit den Mitteln (14) zur Bereitstellung des zweiten Ansteuersignals verbunden sind.

3. Vorrichtung nach einem der vorhergehenden Ansprüche, **dadurch gekennzeichnet, dass** die Mittel (14) zur Bereitstellung des zweiten Ansteuersignals (s2) eine Recheneinheit umfassen, die das zweite Ansteuersignal (s2) in Abhängigkeit vom Erregerstrom ermittelt.

## Claims

1. Device for minimizing the current consumption of a motor vehicle generator from the battery during the start phase of a motor vehicle, which device has:
- a generator unit (10) and
- a generator controller (1) having a controller control system (7) and an end stage (6), wherein
- the controller control system (7) supplies an actuation signal having a duty ratio to the end stage (6),
- the controller control system (7) has means (13) for providing a first actuation signal (s1),
- the controller control system (7) has means (14) for providing a second actuation signal (s2), which has a duty ratio which is a function of the excitation current,
**characterized in that**
- the means (13) for providing the first actuation signal (s1) have a non-volatile memory in which data which is stored during manufacture of the generator controller in the factory and which specifies a predefined, fixedly set duty ratio is stored, and **in that**
- the controller control system has means (15) for selecting the actuation signal having the smaller of the two duty ratios, which actuation signal is fed as actuation signal (s) to the end stage (6), wherein
- the means (15) for selecting the actuation signal having the smaller of the two duty ratios comprise a comparator which is connected to the means (13) for providing the first actuation signal (s1) and to the means (14) for providing the second actuation signal (s2) and which provides on the output side the actuation signal (s) having the smaller of the two duty ratios.

2. Device according to Claim 1, **characterized in that** it has means (16) for measuring the excitation current, which means are connected to the means (14) for providing the second actuation signal.

3. Device according to either of the preceding claims, **characterized in that** the means (14) for providing the second actuation signal (s2) comprise an arithmetic unit which calculates the second actuation signal (s2) as a function of the excitation current.

## Revendications

1. Dispositif pour minimiser le prélèvement de courant de la batterie par un générateur d'un véhicule automobile pendant la phase de démarrage d'un véhicule automobile, qui présente
- une unité de générateur (10) et
- un régulateur de générateur (1) présentant une commande de régulateur (7) et un étage terminal (6),
- la commande de régulateur (7) de l'étage terminal (6) acheminant un signal de commande présentant un rapport cyclique,
- la commande de régulateur (7) présentant des moyens (13) pour fournir un premier signal de commande (s1),
- la commande de régulateur (7) présentant des moyens (14) pour fournir un deuxième signal de commande (s2) qui présente un rapport cyclique dépendant du courant excitateur,
**caractérisé en ce que**
- les moyens (13) pour fournir le premier signal de commande (s1) présentent une mémoire non volatile dans laquelle sont mémorisées des données consignées lors de la fabrication du régulateur de générateur en atelier, lesquelles spécifient un rapport cyclique prédéfini établi fixement et **en ce que**
- la commande de régulateur présente des moyens (15) pour sélectionner le signal de commande ayant le plus petit des deux rapports cycliques, lequel est acheminé en tant que signal de commande (s) à l'étage terminal (6),
- les moyens (15) pour sélectionner le signal de commande ayant le plus petit des deux rapports cycliques comprenant un comparateur qui est connecté aux moyens (13) pour fournir le premier signal de commande (s1) et aux moyens (14) pour fournir le deuxième signal de commande (s2) et qui fournit en sortie le signal de commande (s) ayant le plus petit des deux rapports cycliques.

2. Dispositif selon la revendication 1, **caractérisé en ce qu'**il présente des moyens (16) pour mesurer le courant excitateur, lesquels sont connectés aux moyens (14) pour fournir le deuxième signal de commande.

3. Dispositif selon l'une quelconque des revendications précédentes, **caractérisé en ce que** les moyens (14) pour fournir le deuxième signal de commande (s2) comprennent une unité de calcul qui détermine le deuxième signal de commande (s2) en fonction du courant excitateur.
